# EUROPEAN PATENT APPLICATION

(11) **EP 1 939 073 A2**
(43) Date of publication of application: **02.07.2008**
(21) Application number: 07254852.2
(22) Date of filing: 13.12.2007
(51) Int. Cl.: B62D 7/14

(54) **Vehicle having steerable rear wheels**

(30) Priority: 14.12.2006 GB 0624925
(71) Applicant: One80 Limited, Leamington Spa CV32 4PE (GB)
(72) Inventor: Randle, Steven James, Warwick CV34 6UW (GB)
(74) Representative: Tranter, Andrew David

(57) **Abstract**

A passenger vehicle has at least one pair of steerable rear wheels in addition to steerable front wheels, the rear wheels being adapted to provide additional steering to supplement the steering of the front wheels by angular movement of the rear wheels away from a straight ahead position, further comprises a vehicle body having a front and a rear, and a rear suspension assembly comprising left and right suspension subassemblies (1,2); front road wheels; and rear road wheels, each of the rear suspension assemblies (1,2) respectively carrying at least one of the rear road wheels. Each subassembly (1,2) comprises an actuator (70,72) connected at one point to a first part (60) of the suspension subassembly (1,2) that supports the wheel and at a second part to a second part (50) of the suspension subassembly (1,2). The first part comprises a steering knuckle (60), the second part comprises a trailing arm or semi trailing arm (50), and the actuator (70,72) is operable under the control of a control means to generate relative movement between the first suspension part (60) and second suspension part (50) so as to provide steering of the rear wheels relative to the vehicle body through an angle of at least 5 degrees to each side of a straight ahead position. The vehicle may be constructed by modifying an existing non-rear wheel steering vehicle. A passenger vehicle with rear wheel steering is also disclosed in which the steering can be locked at speeds above a threshold operational level for a stability control program fitted to the vehicle.

## Description

This invention relates to improvements in vehicle chassis, and in particular to a vehicle having rear wheel steering.

It is most common to steer the front wheels of a vehicle. It is also known to steer the rear wheels or perhaps to steer all four. Rear wheel or four wheel steering is relatively rare in passenger cars and such like but is commonly found on large commercial vehicles. The advantage of providing rear wheel or four wheel steering is that a smaller turning circle can be achieved than for a front wheel steer vehicle. This is particularly true for front wheel drive vehicles having transverse engines, in which the amount of available steering lock at the front wheels may be limited by the width of the engine.

Several attempts at providing steering of the rear wheels of a roadgoing passenger vehicle to improve its turning circle have been made. In the vast majority of cases the steering has been achieved using a single actuator driving a rack via a pinion, the rack being connected to the chassis so that the actuator pushes/pulls the rear wheels out of the straight ahead position through a complex arrangement of links. This has disadvantages in that space must be found around the suspension to accommodate the actuator.

According to a first aspect the invention provides a passenger vehicle having at least one pair of steerable rear wheels in addition to steerable front wheels, the rear wheels being adapted to provide additional steering to supplement the steering of the front wheels by angular movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to a second part of the suspension subassembly, characterised in that:
   the first part comprises a steering knuckle,
   the second part comprises a trailing arm or semi trailing arm, and
   the actuator is operable under the control of a control means to generate relative movement between the first suspension part and second suspension part so as to provide steering of the rear wheels relative to the vehicle body through an angle of at least 5 degrees to each side of a straight ahead position.

The vehicle may comprise a rear wheel drive vehicle in which a driveshaft is connected to each wheel.

The vehicle may only have driven rear wheels (RWD) or may also have driven front wheels (4WD). The rear wheels may be driven full or part time, receiving drive from a drive shaft.

By providing two actuators, one per side of the vehicle, which each connect a part of the suspension to a different part of the suspension and are operable to cause the rear wheels to steer, a compact and independent suspension arrangement is maintained which can move through large angles of greater than 5 degrees to give an improved turning circle at low speeds. This makes the assembly suitable for retrofitting to an existing vehicle that only has front wheel steering because special mounts to connect the actuators to the vehicle body are not needed. In this manner the turning circle of a vehicle can be reduced compared with that of the identical vehicle fitted with front wheel steering only.

The actuator may comprise a link which defines a part of the vehicle suspension.

By making the actuator perform a role as part of the suspension the number of component parts can be kept to a minimum.

Where the actuator comprises a link it may have a variable length, by which we may mean that it defines first and second fixing points and may be operable to cause the points to move closer to one another or farther away, such movement being the primary driver for steering of the rear wheel. It may be locked at any point within its range of lengths or may be lockable in a number of discrete positions.

The steering knuckle may have upper and lower bearings, an imaginary line connecting the bearings defining an axis about which the knuckle can pivot and about which each rear wheel is steered, the actuator being connected at one end to the knuckle at a point offset from this imaginary line such that changes in length of the actuator cause the knuckle to rotate, the steering knuckle in turn supporting the rear wheel. The imaginary line may lie in a substantially vertical plane, perhaps exactly vertical or within 5 or 10 or perhaps 20 degrees of vertical.

The knuckle may function as a wheel carrier and include a spindle which receives an inner bearing of a wheel hub. The wheel may be bolted to the wheel hub.

The second part of the suspension may comprise a trailing arm, a semi-trailing A beam or arm or perhaps a twist beam. In each case, the resulting suspension will permit routing of a drive shaft to the wheel hub.

The suspension may generally have the form of a Chapman strut suspension assembly, or perhaps a semi-trailing arm suspension assembly or twist beam assembly.

The actuator may comprise a motor and rack or ball-screw or a hydraulic strut/ram.

The actuators may be adapted to turn each of the rear wheels through an angle of greater than 5 degrees, perhaps through an angle of at least 10 degrees to each side of a straight ahead position, or perhaps up to 20 degrees or say 30 degrees. They may both move in the same direction which may be opposite to the direction in which the front wheels move. The control means may therefore receive signals indicative of the movement of the front wheels away from the straight ahead position. Preferably, both rear wheels move through an angle which is related to the angle of the front wheels by the function X = -AY where X is the front wheel angle, Y is the rear wheel angle and A is a scaling factor.

The control means may comprise a microprocessor, which may be adapted to supply control signals to both actuators indicative of the angle of rear steering required. The actuators may be responsive to electrical control signals from the control means. Where the actuators comprise links which can alter in length, the control signals may indicate a desired length of the links. Each link may be set to a different length.

A switch means may be provided which allows the rear wheel steering to be turned on and off manually by a user operating the switch. This allows the user to run the vehicle with no rear wheel steering if required. In that case, the control means may simply not send the steering control signals to the actuators, or not even produce the steering control signals in the first place.

The suspension subassemblies may be independent, semi-independent or may form part of a common suspension assembly.

Where the subassemblies are independent they may comprise a semi-trailing arm which connects the wheel carrier to the chassis. The actuator may connect to the trailing arm or the vehicle body.

Where the subassemblies are not independent they may comprise opposing ends of a twist beam suspension arrangement and may be connected by a twist beam (sometimes called a torsion beam). The actuators may connect to the beam or the body or to the arms at each end of the beam.

It will be understood that by connected to the vehicle body we mean that a part is connected to the vehicle chassis. In the case of a vehicle having a monocoque body this may mean connected to a fixed point on the monocoque body. Where a separate chassis is provided a connecting to the body may comprise a connection to the chassis.

The vehicle may comprise a roadgoing passenger vehicle. It may comprise a modified Mercedes Vito van.

The vehicle with the rear wheel steering on full lock and the front wheel steering on full lock may have a turning circle of less than or equal to 27feet. This would make it suitable for use as a City of London Taxi.

The suspension may include a lock mechanism which is operable to between a released position in which it permits angular movement of the wheel about the straight ahead position or a locked position in which it locks the suspension to prevent angular movement of the wheel relative to the straight ahead position. The lock mechanism may fix the wheel in the straight ahead position when locked.

Each subassembly may be provided with its own lock mechanism.

The lock mechanism of each subassembly may operate independent of the actuator. It is possible to simply lock the actuator in position but it is felt that providing a separate lock provides greater security.

The lock may in a simple form be implemented by fixing the position/length of the actuator. For example, if the actuator is a hydraulic strut then the fluid in the strut may be fixed to prevent it extending or shortening.

The lock mechanism may be selectively locked or unlocked under driver control by operation of a second switch means, which may be a switch or button or lever. This may be same switch means as the first switch means.

The switch means may open and close a circuit, or cause a digital signal to be transmitted, to an additional control means. This may be a processor, which may be the same processor used to control the actuator positions. The control means may issue control signals to the lock mechanism, or open and close an electrical circuit containing the lock mechanism. The precise implementation will depend on the precise requirements of the lock mechanism.

Additionally or independently the lock mechanism may be selectively locked or unlocked dependent upon the vehicle speed. For example it may be locked in the straight ahead position at vehicle speeds that exceed a predetermined level. This may suitably be at speeds above 4mph, or 5mph or 10mph. This ensures that the stability of the vehicle is not compromised at high speeds.

The vehicle may be provided with a stability control program (such as DSC) in which case the speed at which the lock mechanism locks the rear wheels in the straight ahead position may correspond to the speed at which the control program becomes effective. Typically such DSC systems work by receiving information from a wheel speed sensor which may not be sufficiently accurate or reliable at low speeds. Making it only operate above low speeds ensures that the accuracy or reliability that it needs to function correctly is provided. The applicant have found that it is advantageous not to provide rear steering at those higher speeds since it may confuse or comprise the stability program fitted to the vehicle. This is especially significant where the vehicle is normally not rear wheel steered but is modified to provide a vehicle in accordance with the invention.

According to a second aspect the invention provides a method of converting a rear wheel drive vehicle having only front wheel steering to a vehicle that also has rear wheel steering comprising providing on each side of the vehicle an actuator having a variable length, and supporting the rear wheel on a steering knuckle whose angular position relative to the vehicle is dependent on the length of the actuator.

The method may be suitable for converting a standard front wheel steer vehicle to four wheel steer vehicle that complies with the regulations for London taxis.

The method may comprise pivotally supporting the knuckle on a suspension link and connecting the actuator between the knuckle and a part of the link or the body of the vehicle.

According to a third aspect the invention provides a passenger vehicle having at least one pair of steerable rear wheels in addition to steerable front wheels, the rear wheels being adapted to provide additional steering to supplement the steering of the front wheels by movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to either the body of the vehicle or a second part of the suspension, the actuator is operable under the control of a control means to generate relative movement between the first suspension part and the vehicle body or second suspension part so as to provide steering of the rear wheels relative to the vehicle body through an angle of greater than 5 degrees to each side of a straight ahead position and further including:
   a lock mechanism which is operable between a released position in which it permits the angular movement of the rear wheels about the straight ahead position or a locked position in which it locks the suspension subassemblies with the rear wheels in a straight ahead position.

The lock mechanism may lock the wheels in the straight ahead position for vehicle speeds above a predetermined level, say 20mph.

A switch may be provided which enables the driver to set the lock mechanism in its released and locked positions. The switch may only allow the lock to be released at speeds below the threshold speed level.

According to a fourth aspect the invention provides a passenger vehicle having at least one pair of steerable rear wheels in addition to steerable front wheels, the rear wheels being adapted to provide additional steering to supplement the steering of the front wheels by movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to either the body of the vehicle or a second part of the suspension, the actuator is operable under the control of a control means to generate relative movement between the first suspension part and the vehicle body or second suspension part so as to provide steering of the rear wheels relative to the vehicle body through an angle of greater than 5 degrees to each side of a straight ahead position and further including:
   and
   a switch means which enables a driver of the vehicle to manually turn the rear wheel steering on and off.

Allowing the user to manually turn the rear wheel steering off when the vehicle is not required to make a very tight turn (for which the addition of rear wheel steering is a benefit) provides a more consistent feel to the steering of the vehicle at other times.

The control means may be adapted to automatically turn off the rear wheel steering and optionally activate a lock mechanism that prevents the wheels from moving out of the straight ahead position when the vehicle exceeds a predetermined speed.

It should also be understood that all of the features of the first aspect of the invention apply to the second, third and fourth aspects of the invention.

There will now be described, by way of example only, one embodiment of the present invention with reference to the accompanying drawings of which:
Figure 1 is an isometric illustration of a first embodiment of a rear suspension arrangement for a vehicle;
Figures 2 and 3 are alternative views of a proposed prototype arrangement of one subassembly of a suspension assembly illustrated in Figure 1 as fitted to a van;
Figure 4 is an illustration of an alternative suspension arrangement in accordance with the present invention.

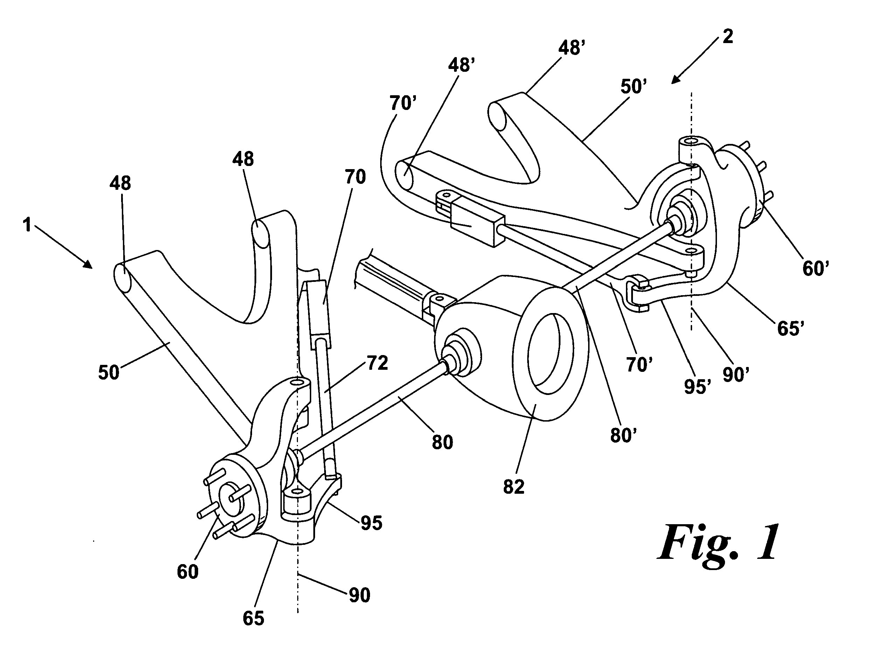

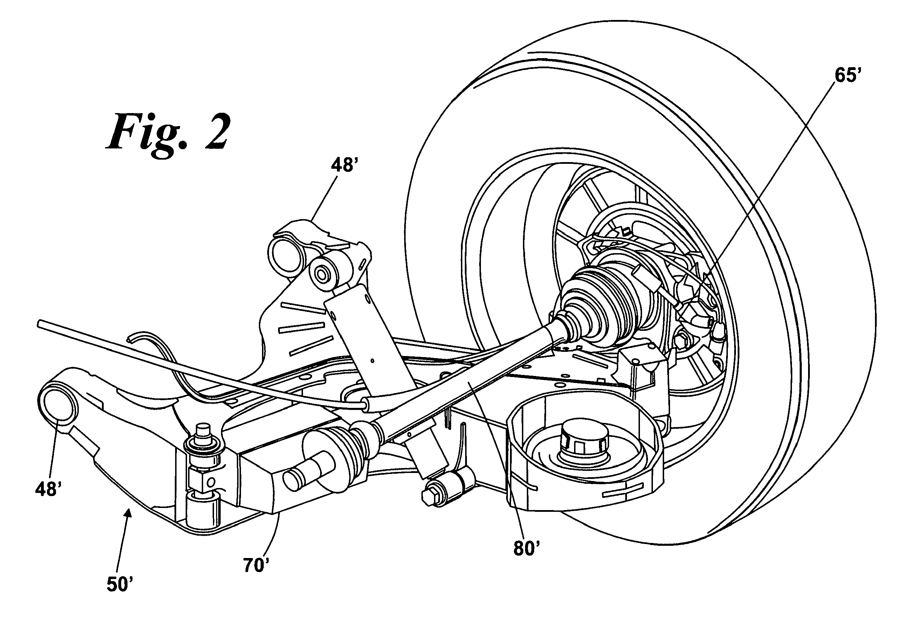

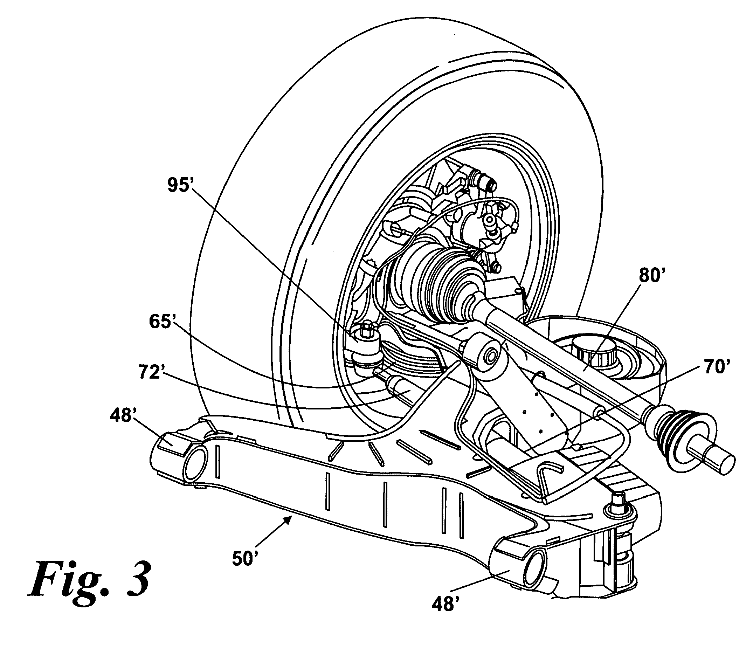

The illustrated suspension assembly of Figures 1, 2 and 3 is suitable for fitment to a rear wheel drive vehicle in place of its standard suspension assembly. In this example, the vehicle is a Mercedes Vito passenger van.

This suspension assembly is provided at the rear of the vehicle, by which we mean the conventional use of the term rear. Prior to modification the suspension comprises a pair of independent rear subassemblies 1, 2 each independently supporting one rear wheel (not shown) from the body (also not shown). By independent we mean that each subassembly can react to bumps in the road without directly influencing the other. The wheels in this example are driven wheels and power is fed to the wheels through two drive shafts that project from a final drive unit fixed to the vehicle body.

To best understand the invention it is helpful to consider the van suspension prior to modification. Each subassembly comprises a semi-trailing A-shaped arm 50 having two spaced apart mounts 48 at its base and a further mount (not shown) at its head. The two mounts at the base receive bushes and bolts which fasten it to a part of the vehicle body. Because the bolts pass through the bushes in the mounts the A-arm 1 is free to pivot about an axis that passes through the centre of the two bush mounts. This axis lies generally longitudinal of the vehicle.

The head of the semi-trailing arm 50 is bolted to a wheel carrier. This wheel carrier is a forging that is adapted to support the inner wheel bearings of a road wheel hub about a spindle formed in the carrier.

The end of the A-arm nearest the wheel carrier is provided with a recess that defines a lower seat for a concentric coil spring/damper assembly 5, an upper seat 6 being defined by a portion of the vehicle body that lies generally above the wheel carrier. When the vehicle is resting on its rear wheels, the spring and damper support the vehicle above the wheel carrier, compressing the coil spring in doing so.

In a modification, which falls within the scope of the present invention and is illustrated in Figures 1 2 and 3, a linear actuator which provides steering is provided. This actuator is responsive to electrical signals and can be made to increase or decrease in length in the manner of a ram. It comprises a body 70 and an actuator rod 72 which can move in and out of the body. It is therefore in effect a trailing arm of variable length and when not being caused to change length is acting purely as a trailing arm.

The actuator 70, 72 connects to a point on the trailing arm 50 close to the chassis. At its other end it is connected to a steering knuckle 65 which replaces the standard wheel carrier.

The steering knuckle 65 has a wheel spindle as for the original wheel carrier but now has upper and lower pivot points which are connected to the upper and lower connecting points of the A-arm through cylindrical bearings. This is the sole connection to the trailing arm 1 and as such the knuckle 8 can rotate about an axis 90, generally vertical, that passes through both the upper and lower bearings.

The other end of the actuator 7 connects to the knuckle 65 at a point offset from the axis of rotation 90 of the knuckle. In fact, it connects to a spur or steering arm 95 which projects from the knuckle 65 towards the centreline of the vehicle. The distance by which this connection to the steering arm is offset from the pivot axis of the knuckle determines how much leverage can be applied by the actuator.

The actuators 70, 72 on each side of the vehicle are connected to a central processing unit (not shown) through power cables. The control unit applies control signals to the power cables which signals determine how much the actuators should extend/contract. Generally, one will be instructed to contract whilst the other extends. This will cause both wheels to steer through equal angles.

The control unit receives signals from a steering sensor that monitors steering demand made by the driver. It may take a signal from an angular position which monitors angular position of the vehicles steering column.

The control unit may be adapted to instruct the actuators to lock the rear wheels in a straight ahead position when the speed of the vehicle exceeds a predefined level. For example, the rear wheels may lock when the speed of the vehicle exceeds 10mph. The actuators may therefore in effect be used as a lock mechanism for the rear wheel steering function at anything above low speeds.

A switch (not shown) may also be provided which allows the user to lock and unlock the actuators on demand. This may even allow them to be unlocked at speeds in excess of 10mph, although it is preferable that the speed limit overrides the users operation of the lock.

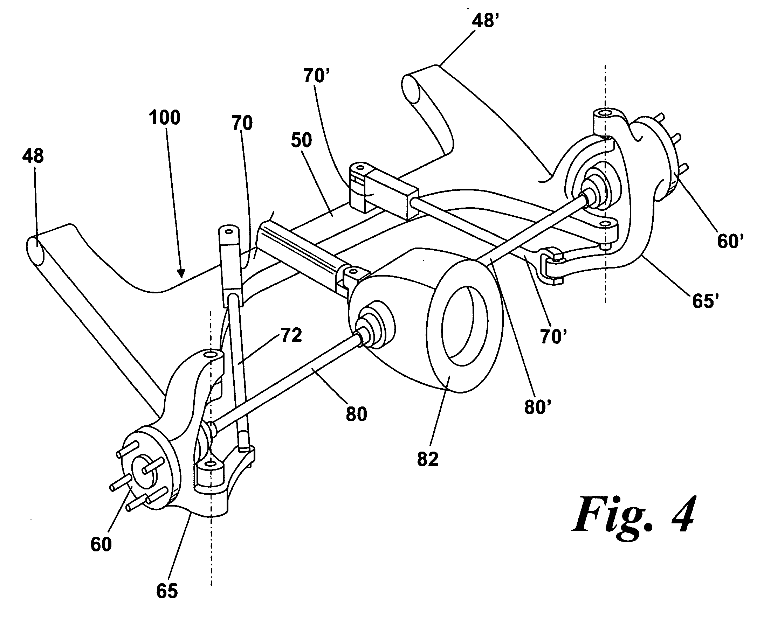

In an alternative shown in Figure 4 of the accompanying drawings, the invention can be applied to a twist beam or torsion beam suspension arrangement. In such an arrangement, the two semi-trailing arms 50 are replaced by a single H arm 100 which includes a flattened central twist beam. The two actuators may connect to this beam close to its ends. Otherwise, this arrangement is functionally the same as for the embodiment shown in Figure 1 of the drawings.

It will be appreciated that the arrangements shown in the drawings provide a compact assembly which can readily be used to adapt a front wheel steer vehicle to rear wheel steer or four wheel steer. It comprises in its simplest a modification of the suspension and wheel carrier only and as such requires no modification to the vehicle body. The standard connecting points are used. When the actuator is locked in position it behaves in the same way as the standard suspension and can therefore be made almost transparent to any other control systems on the vehicle such as antilock braking (ABS) or traction control systems (TCS).

It should be understood that whilst the preferred embodiment comprises a modification of a standard vehicle to provide rear wheel steering, the steering could be design in to the vehicle from its conception. This may allow further optimisation of the design to be made whilst retaining the same essential principles of construction.

## Claims

1. A passenger vehicle having at least one pair of steerable rear wheels in addition to steerable front wheels, the rear wheels being adapted to provide additional steering to supplement the steering of the front wheels by angular movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to a second part of the suspension subassembly,
**characterised in that**:
the first part comprises a steering knuckle,
the second part comprises a trailing arm or semi trailing arm, and
the actuator is operable under the control of a control means to generate relative movement between the first suspension part and the second suspension part so as to provide steering of the rear wheels relative to the vehicle body through an angle of at least 10 degrees to each side of a straight ahead position.

2. A passenger vehicle according to claim 1 which comprises a rear wheel drive or 4 wheel drive vehicle in which a driveshaft is connected to each rear wheel.

3. A passenger vehicle according to claim 1 or 2 in which the actuator comprises a link which defines a part of the vehicle suspension.

4. A passenger vehicle according to claim 3 in which the actuator comprises a link of variable length.

5. A passenger vehicle according to any preceding claim in which the steering knuckle has upper and lower bearings, an imaginary line connecting the bearings defining an axis about which the knuckle can pivot and about which each rear wheel is steered, the actuator being connected at one end to the knuckle at a point offset from this imaginary line such that changes in length of the actuator cause the knuckle to rotate, the steering knuckle in turn supporting a rear wheel and in which he imaginary line lies in a substantially vertical plane.

6. A passenger vehicle according to any preceding claim in which the knuckle functions as a wheel carrier and includes a spindle which receives an inner bearing of a wheel hub.

7. A passenger vehicle according to any preceding claim in which the second part of the suspension comprises a trailing arm, a semi-trailing A beam or arm or a twist beam.

8. A passenger vehicle according to claim 7 in which the suspension comprises a Chapman strut suspension assembly, a semi-trailing arm suspension assembly or twist beam assembly.

9. A passenger vehicle according to any preceding claim in which the actuator comprises a motor and rack or ball-screw or a hydraulic strut/ram.

10. A passenger vehicle according to any preceding claim in which actuators are adapted to turn each of the rear wheels through an angle of greater than 20 degrees or greater than 30 degrees from the straight ahead position.

11. A passenger vehicle according to any preceding claim in which both rear wheels are moved by the actuators in the same direction which direction is opposite to the direction in which the front wheels are moved relative to the straight ahead position.

12. A passenger vehicle according to any preceding claim in which a switch means is provided which enables the rear wheel steering to be turned on and off manually by a user operating the switch.

13. A passenger vehicle according to any preceding claim which includes a lock mechanism which is operable between a released position in which it permits angular movement of the wheel about the straight ahead position or a locked position in which it locks the suspension to prevent angular movement of the wheel relative to the straight ahead position, the lock mechanism fixing the wheel in the straight ahead position when locked.

14. A passenger vehicle according to claim 13 in which the lock mechanism is operable to be selectively locked or unlocked under driver control by operation of a second switch means.

15. A passenger vehicle according to any preceding claim which with the rear wheel steering on full lock and the front wheel steering on full lock has a turning circle of less than or equal to 27 feet.

16. A method of converting a rear wheel drive vehicle having only front wheel steering to a vehicle that also has rear wheel steering comprising providing on each side of the vehicle an actuator having a variable length, and supporting the rear wheel on a steering knuckle whose angular position relative to the vehicle is dependent on the length of the actuator.

17. A passenger vehicle having at least one pair of steerable rear wheels in addition to steerable front wheels, the rear wheels being adapted to provide additional steering to supplement the steering of the front wheels by movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to either the body of the vehicle or a second part of the suspension, the actuator is operable under the control of a control means to generate relative movement between the first suspension part and the vehicle body or second suspension part so as to provide steering of the rear wheels relative to the vehicle body through an angle of greater than 5 degrees to each side of a straight ahead position and further including:
a lock mechanism which is operable between a released position in which it permits the angular movement of the rear wheels about the straight ahead position or a locked position in which it locks the suspension subassemblies with the rear wheels in a straight ahead position.

18. A passenger vehicle according to claim 17 in which the lock mechanism is operable to lock the wheels in the straight ahead position for vehicle speeds above a predetermined level.

19. A passenger vehicle according to claim 18 which includes stability control program (such as DSC) and in which the speed level at which the lock mechanism locks the rear wheels in the straight ahead position corresponds to the speed below which the stability control program is not operational.

20. A passenger vehicle according to claim 17, 18 or 19 in which a switch is provided which enables the driver to set the lock mechanism in its released and locked positions.

21. A passenger vehicle according to claim 20 when dependent on claim on claim 18 or 19 in which the switch only enables the lock mechanism to be released at speeds below the threshold speed level.

22. A passenger vehicle having at least one pair of steerable rear wheels in addition to steerable front wheels, the rear wheels being adapted to provide additional steering to supplement the steering of the front wheels by movement of the rear wheels away from a straight ahead position, comprising:
a vehicle body having a front and a rear, and
a rear suspension assembly comprising left and right suspension subassemblies;
front road wheels; and
rear road wheels, each of the rear suspension assemblies respectively carrying at least one of the rear road wheels;
in which each subassembly comprises an actuator connected at one point to a first part of the suspension subassembly that supports the wheel and at a second part to either the body of the vehicle or a second part of the suspension, the actuator is operable under the control of a control means to generate relative movement between the first suspension part and the vehicle body or second suspension part so as to provide steering of the rear wheels relative to the vehicle body through an angle of greater than 5 degrees to each side of a straight ahead position and further including:
and
a switch means which enables a driver of the vehicle to manually turn the rear wheel steering on and off.

23. A passenger vehicle according to claim 22 in which the switch only enables the lock mechanism to be released at speeds below a threshold speed level.
